(19) Europäisches Patentamt
European Patent Office
Office européen des brevets

(11) **EP 3 561 735 A1**

(12) **EUROPEAN PATENT APPLICATION**

(43) Date of publication:
**30.10.2019  Bulletin 2019/44**

(21) Application number: **19168125.3**

(22) Date of filing: **09.04.2019**

(51) Int Cl.:
**G06N 3/04** (2006.01)    **G06N 3/08** (2006.01)
**G06N 5/00** (2006.01)    **G06N 20/20** (2019.01)
**G06Q 10/10** (2012.01)    **G06Q 10/06** (2012.01)
**G06N 5/02** (2006.01)    **G06N 7/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2018  US 201815964586**

(71) Applicant: **Microsoft Technology Licensing, LLC
Redmond, WA 98052 (US)**

(72) Inventors:
• **MA, Yiming
  Redmond, WA 98052 (US)**

• **LU, Wei
  Redmond, WA 98052 (US)**
• **JIA, Jun
  Redmond, WA 98052 (US)**
• **CHEN, Bee-Chung
  Redmond, WA 98052 (US)**
• **LONG, Bo
  Redmond, WA 98052 (US)**

(74) Representative: **CMS Cameron McKenna Nabarro
Olswang LLP
Cannon Place
78 Cannon Street
London EC4N 6AF (GB)**

(54) **INTEGRATING DEEP LEARNING INTO GENERALIZED ADDITIVE MIXED-EFFECT (GAME) FRAMEWORKS**

(57)    In an example embodiment, knowledge discovery using deep learning is combined with the scalability and personalization capabilities of generalized additive mixed effect (GAME) modeling. Specifically, features learned in a last fully connected layer of a deep learning model may be used to augment features used in a fixed or random effects training portion of a GAME model.

*FIG. 6*

**Description**

TECHNICAL FIELD

The present disclosure generally relates to technical problems encountered in providing machine learning on computer systems. More specifically, the present disclosure relates to the integration of deep learning into generalized additive mixed-effect frameworks.

BACKGROUND

The rise of the Internet has occasioned two disparate yet related phenomena: the increase in the presence of social networking services, with their corresponding member profiles visible to large numbers of people, and the increase in the use of these social networking services to perform searches or obtain information. An example of a common search or recommendation provided on a social networking service is the search for jobs that have been posted on, or linked to by, the social networks.

A technical problem encountered by social networking services in managing online job searches is that determining how to serve the most appropriate and relevant information with minimal delay becomes significantly challenging as the number of sources and volumes of information shared via the social networking services grows at an unprecedented pace. This includes determining how to recommend, for example, job openings and course offerings as well as determining which feed items to surface in an online feed.

Personalization of job search and other results is also desirable. For example, when users search for a query like "software engineer", depending on the skills, background, experience, location, and other factors about the users, the odds that the users will interact with the results (such as by applying to an underlying job) can be drastically different. For example, a person skilled in user interfaces would see a very different set of job results compared to someone specializing in hardware. Indeed, even people having the same skill sets and current job could have different odds of interacting with the same results.

Results may also be presented without an explicit search performed by a user, specifically in the form of recommendations. Recommender systems are automated computer programs that match items to users in different contexts. In order to achieve accurate recommendations on a large scale, machine learned models are used to estimate user preferences from user feedback data. Such models are constructed using large amounts of high-frequency data obtained from past user interactions with objects or results.

Historically, models to rank job search results in response to a query or perform other recommendations have heavily utilized text and entity-based features extracted from the query and job postings to derive a global ranking or recommendation. An example of such models is a generalized linear model (GLM). A GLM is a generalization of linear regression that allows for response variables that have error distribution models other than a normal distribution. The GLM generalizes linear regression by allowing the linear model to be related to the response variable via a link function and by allowing the magnitude of the variance of each measurement to be a function of its predicted value.

GLMs may utilize the following prediction formula:

$$g\left(\mathbb{E}\left[y_{ij}\right]\right) = x'_{ij}w \ ,$$

where this formula predicts the response of user $i$ to item $j$, and $x_{ij}$ is a feature vector, w is a coefficient vector,

$$\mathbb{E}\left[y_{ij}\right]$$

is an expectation of response, and g() is a link function.

However, in scenarios where data is abundant, having a more fine-grained model at the user or item level would potentially lead to more accurate prediction, as the user's personal preferences on items and the item's specific attraction for users could be better captured.

Use of a generalized additive mixed-effect (GAME) framework provides significant power and scalability in modeling personalized interactions. From the technical standpoint, however, its performance is subjected to the input knowledge of different entities (e.g., member, jobs, news updates, etc.). The deeper the understanding of these entities and the interactions among them, the better the modeling outcomes can be. The flipside, however, is that, without this deep understanding, the GAME framework does not provide enough reliability, despite its scalability and personalization capabilities.

SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

In an example embodiment, knowledge discovery using deep learning is combined with the scalability and personalization capabilities of generalized additive mixed effect (GAME) modeling. Specifically, features learned in a last fully connected layer of a deep learning model may be used to augment features used in a fixed or random effects training portion of a GAME model.

A first aspect provides a system comprising: a computer-readable medium having instructions stored thereon, which, when executed by a processor, cause the system to: obtain a first set of features derived from data in a social networking service; feed the first set of features into a first deep learning model to generate a first prediction, the first deep learning model comprising a plurality of fully connected layers of neurons, the first prediction generated by passing the first set of features to a first of the plurality of fully connected layers, which successively passes features to another of the plurality of fully connected layers until reaching a final of the plurality of fully connected layers, which outputs the first prediction using a second set of features; obtain a third set of features derived from data in the social networking service; feed the third set of features into a generalized additive mixed effect (GAME) model, the GAME model comprising a fixed effect training portion and a random effects training portion, the fixed effect training portion using the third set of features, the random effects training portion using a fourth set of features; and during training of the fixed effect training portion and the random effects training portion, augment either the third set of features or fourth set of features with the second set of features from the first deep learning model, causing the GAME model to be trained based on the second set of features learned by the first deep learning model.

The instructions may further cause the system to: obtain weights learned by the batch gradient descent of either the fixed effects training portion or the random effects training portion; and use the weights to train the first fully connected layer of the first deep learning model.

The instructions may further cause the system to: obtain a fifth set of features derived from data in a social networking service; feed the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

The instructions further cause the system to: during training of the fixed effect training portion and the random effects training portion, augment either the third set of features or fourth set of features with the sixth set of features from the second deep learning model, causing the GAME model to be trained based on the second set of features learned by the second deep learning model.

The first set of features and the second set of features may be identical.

The first prediction may be predicting the same type of output as the second prediction.

The first prediction may be predicting the same type of output as the third prediction.

A second aspect provides a computerized method comprising: obtaining a first set of features derived from data in a social networking service; feeding the first set of features into a first deep learning model to generate a first prediction, the first deep learning model comprising a plurality of fully connected layers of neurons, the first prediction generated by passing the first set of features to a first of the plurality of fully connected layers, which successively passes features to another of the plurality of fully connected layers until reaching a final of the plurality of fully connected layers, which outputs the first prediction using a second set of features; obtaining a third set of features derived from data in the social networking service; feeding the third set of features into a generalized additive mixed effect (GAME) model, the GAME model comprising a fixed effect training portion and a random effects training portion, the fixed effect training portion using the third set of features, the random effects training portion using a fourth set of features; and during training of the fixed effect training portion and the random effects training portion, augmenting either the third set of features or fourth set of features with the second set of features from the first deep learning model, causing the GAME model to be trained based on the second set of features learned by the first deep learning model.

The method may further comprise: obtaining weights learned by the batch gradient descent of either the fixed effects training portion or the random effects training portion; and using the weights to train the first fully connected layer of the first deep learning model.

The method may further comprise: obtaining a fifth set of features derived from data in a social networking service; and feeding the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

The method may further comprise: during training of the fixed effect training portion and the random effects training portion, augmenting either the third set of features or fourth set of features with the sixth set of features from the second deep learning model, causing the GAME model to be trained based on the second set of features learned by the second deep learning model.

The first set of features and the second set of features may be identical.

The first prediction may be predicting the same type of output as the second prediction.

The first prediction may be predicting the same type of output as the third prediction.

A third aspect provides a non-transitory machine-readable storage medium comprising instructions which, when implemented by one or more machines, cause the one or more machines to perform operations comprising: obtaining a first set of features derived from data in a social networking service; feeding the third set of features into a generalized additive mixed effect (GAME) model, the GAME model comprising a fixed effect training portion and a random effects training portion, the fixed effect training portion using the third set of features, the random effects training portion using a fourth set of features; and obtaining a third set of features derived from data in the social networking service; feeding the third set of features into a generalized additive mixed effect (GAME) model, the GAME model comprising a fixed effect training portion and a random effects training portion, the fixed effect training portion using the third set of features and utilizing batch gradient descent to output a second prediction and a residual, the random effects training portion using a fourth set of features and the residual to output a third prediction; and during training of the fixed effect training portion and the random effects training portion, augmenting either the third set of features or fourth set of features with the second set of features from the first deep learning model, causing the GAME model to be trained based on the second set of features learned by the first deep learning model.

The operations may further comprise: obtaining weights learned by the batch gradient descent of either the fixed effects training portion or the random effects training portion; and using the weights to train the first fully connected layer of the first deep learning model.

The operations may further comprise: obtaining a fifth set of features derived from data in a social networking service; and feeding the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

The operations may further comprise: during training of the fixed effect training portion and the random effects training portion, augmenting either the third set of features or fourth set of features with the sixth set of features from the second deep learning model, causing the GAME model to be trained based on the second set of features learned by the second deep learning model.

The first set of features and the second set of features may be identical.

The first prediction may be predicting the same type of output as the second prediction.

BRIEF DESCRIPTION OF THE DRAWINGS

Some embodiments of the technology are illustrated, by way of example and not limitation, in the figures of the accompanying drawings.

FIG. 1 is a block diagram illustrating a client-server system, in accordance with an example embodiment.

FIG. 2 is a block diagram showing the functional components of a social networking service, including a data processing module referred to herein as a search engine, for use in generating and providing search results for a search query, consistent with some embodiments of the present disclosure.

FIG. 3 is a block diagram illustrating an application server module of FIG. 2 in more detail, in accordance with an example embodiment.

FIG. 4 is a block diagram illustrating the job posting result ranking engine of FIG. 3 in more detail, in accordance with an example embodiment.

FIG. 5 is a block diagram illustrating the kth iteration of a parallelized block coordinate descent under a bulk synchronous parallel (BSP) paradigm, in accordance with an example embodiment.

FIG. 6 is a block diagram illustrating the $k$th iteration of a parallelized block coordinate descent under a bulk synchronous parallel (BSP) paradigm, modified by injecting features generated from deep learning models, in accordance with an example embodiment.

FIG. 7 is a block diagram illustrating a deep learning model 700, in accordance with an example embodiment.

FIG. 8 is a block diagram illustrating the *k*th iteration of a parallelized block coordinate descent under a bulk synchronous parallel (BSP) paradigm, modified by injecting features generated from deep learning models using joint learning, in accordance with an example embodiment.

FIG. 9 is a flow diagram illustrating a method 900 for training a generalized additive mixed effect model, in accordance with an example embodiment.

FIG. 10 is a block diagram illustrating a software architecture, in accordance with an example embodiment.

FIG. 11 illustrates a diagrammatic representation of a machine in the form of a computer system within which a set of instructions may be executed for causing the machine to perform any one or more of the methodologies discussed herein, according to an example embodiment.

## DETAILED DESCRIPTION

## OVERVIEW

The present disclosure describes, among other things, methods, systems, and computer program products that individually provide various functionality. In the following description, for purposes of explanation, numerous specific details are set forth in order to provide a thorough understanding of the various aspects of different embodiments of the present disclosure. It will be evident, however, to one skilled in the art, that the present disclosure may be practiced without all of the specific details.

In an example embodiment, knowledge discovery using deep learning is combined with the scalability and personalization capabilities of generalized additive mixed effect (GAME) modeling.

In one example embodiment, predictions/recommendations are made even more accurate by using three models instead of a single generalized linear mixed effect (GLMix) model. Specifically, rather than having a single GLMix model with different coefficients for, for example, users and items, three separate models are used and then combined. Each of these models has different granularities and dimensions. A global model may model the similarity between user attributes (e.g., from the member profile or activity history) and item attributes. A per-user model may model user attributes and activity history. A per-item model may model item attributes and activity history. Such a model may be termed a generalized additive mixed effect (GAME) model. Similar GAME models may be used for other types of predictions.

In the context of a job search result ranking or recommendation, this results in the following components:

- a global model that captures the general behavior of how members apply for jobs
- a member-specific model with parameters (to be learned from data) specific to the given member to capture member's personal behavior that deviates from the general behavior, and
- a job-specific model with parameters (to be learned from data) specific to the given job to capture the job's unique behavior that deviates from the general behavior.

The following is a description of how a GAME model enables such a level of personalization. Let $y_{mjt}$ denote the binary response of whether user $m$ would apply for job $j$ in context $t$, where the context usually includes the time and location where the job is shown. $q_m$ is used to denote the feature vector of user $m$, which includes the features extracted from the user's public profile, e.g., the member's title, job function, education history, industry, etc. $s_j$ is used to denote the feature vector of job $j$, which includes features extracted from the job post, e.g. the job title, desired skills and experiences, etc. Let $x_{mjt}$ represent the overall feature vector for the ($m$, $j$, $t$) triple, which can include $q_m$ and $s_j$ for feature-level main effects, the outer product between $q_m$ and $s_j$ for interactions among member and job features, and features of the context. It may be assumed that $x_{mjt}$ does not contain member IDs or item IDs as features, because IDs will be treated differently from regular features. The GAME model for predicting the probability of user m applying for job $j$ using logistic regression is:

$$g\big(E\big[y_{mjt}\big]\big) = x'_{mjt}b + s'_j\alpha_m + q'_m\beta_j$$

where $g\big(E\big[y_{mjt}\big]\big) = log \frac{E[y_{mjt}]}{1-E[y_{mjt}]}$ is the link function, $b$ is the global coefficient vector (also called fixed effect coefficients; and $\alpha_m$ and $\beta_j$ are the coefficient vectors specific to user $m$ and job $j$, respectively. $\alpha_m$ and $\beta_j$ are called random effect coefficients, which capture user $m$'s personal preference on different item features and job $j$'s attraction for different member features. For a user $m$ with many responses to different items in the past, this is able to accurately estimate her personal coefficient vector $\alpha_m$ and provide personalized predictions. On the other hand, if user $m$ does not have much past response data, the posterior mean of $\alpha_m$ will be close to zero, and the model for user $m$ will fall back to the global fixed effect component $x'_{mjt}b$. The same behavior applies to the per-job coefficient vector $\beta_j$.

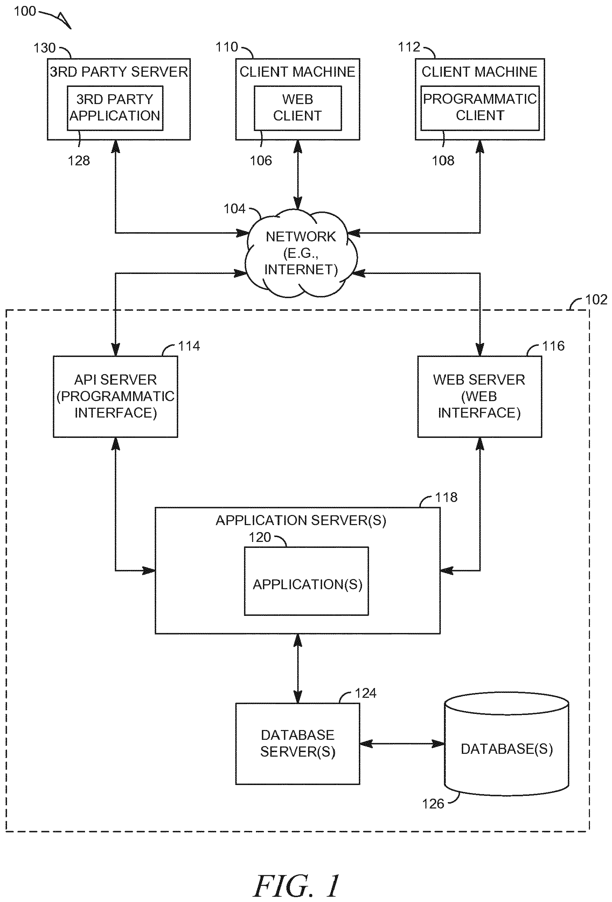

FIG. 1 is a block diagram illustrating a client-server system 100, in accordance with an example embodiment. A networked system 102 provides server-side functionality via a network 104 (e.g., the Internet or a wide area network (WAN)) to one or more clients. FIG. 1 illustrates, for example, a web client 106 (e.g., a browser) and a programmatic client 108 executing on respective client machines 110 and 112.

An application program interface (API) server 114 and a web server 116 are coupled to, and provide programmatic and web interfaces respectively to, one or more application servers 118. The application server(s) 118 host one or more applications 120. The application server(s) 118 are, in turn, shown to be coupled to one or more database servers 124 that facilitate access to one or more databases 126. While the application(s) 120 are shown in FIG. 1 to form part of the networked system 102, it will be appreciated that, in alternative embodiments, the application(s) 120 may form part of a service that is separate and distinct from the networked system 102.

Further, while the client-server system 100 shown in FIG. 1 employs a client-server architecture, the present disclosure is, of course, not limited to such an architecture, and could equally well find application in a distributed, or peer-to-peer, architecture system, for example. The various applications 120 could also be implemented as standalone software programs, which do not necessarily have networking capabilities.

The web client 106 accesses the various applications 120 via the web interface supported by the web server 116. Similarly, the programmatic client 108 accesses the various services and functions provided by the application(s) 120 via the programmatic interface provided by the API server 114.

FIG. 1 also illustrates a third-party application 128, executing on a third-party server 130, as having programmatic access to the networked system 102 via the programmatic interface provided by the API server 114. For example, the third-party application 128 may, utilizing information retrieved from the networked system 102, support one or more features or functions on a website hosted by a third party. The third-party website may, for example, provide one or more functions that are supported by the relevant applications 120 of the networked system 102.

In some embodiments, any website referred to herein may comprise online content that may be rendered on a variety of devices including, but not limited to, a desktop personal computer (PC), a laptop, and a mobile device (e.g., a tablet computer, smartphone, etc.). In this respect, any of these devices may be employed by a user to use the features of the present disclosure. In some embodiments, a user can use a mobile app on a mobile device (any of the machines 110, 112 and the third-party server 130 may be a mobile device) to access and browse online content, such as any of the online content disclosed herein. A mobile server (e.g., API server 114) may communicate with the mobile app and the application server(s) 118 in order to make the features of the present disclosure available on the mobile device.

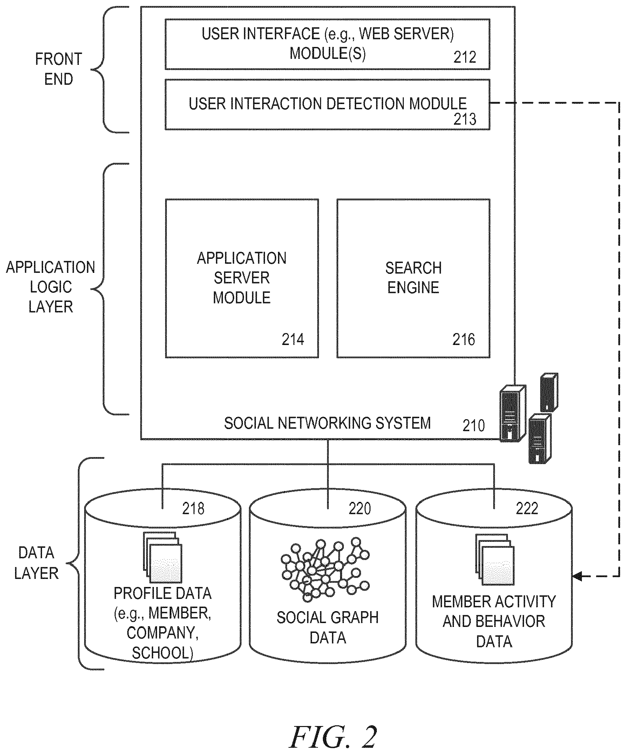

In some embodiments, the networked system 102 may comprise functional components of a social networking service. FIG. 2 is a block diagram showing the functional components of a social networking service, including a data processing module referred to herein as a search engine 216, for use in generating and providing search results for a search query, consistent with some embodiments of the present disclosure. In some embodiments, the search engine 216 may reside on the application server(s) 118 in FIG. 1. However, it is contemplated that other configurations are also within the scope of the present disclosure.

As shown in FIG. 2, a front end may comprise a user interface module (e.g., a web server 116) 212, which receives requests from various client computing devices, and communicates appropriate responses to the requesting client devices. For example, the user interface module(s) 212 may receive requests in the form of Hypertext Transfer Protocol (HTTP) requests or other web-based API requests. In addition, a user interaction detection module 213 may be provided to detect various interactions that members have with different applications 120, services, and content presented. As shown in FIG. 2, upon detecting a particular interaction, the user interaction detection module 213 logs the interaction, including the type of interaction and any metadata relating to the interaction, in a member activity and behavior database 222.

An application logic layer may include one or more various application server modules 214, which, in conjunction with the user interface module(s) 212, generate various user interfaces (e.g., web pages) with data retrieved from various data sources in a data layer. In some embodiments, individual application server modules 214 are used to implement the functionality associated with various applications 120 and/or services provided by the social networking service.

As shown in FIG. 2, the data layer may include several databases 126, such as a profile database 218 for storing profile data, including both user profile data and profile data for various organizations (e.g., companies, schools, etc.). Consistent with some embodiments, when a person initially registers to become a user of the social networking service, the person will be prompted to provide some personal information, such as his or her name, age (e.g., birthdate), gender, interests, contact information, home town, address, spouse's and/or family members' names, educational background (e.g., schools, majors, matriculation and/or graduation dates, etc.), employment history, skills, professional organizations, and so on. This information is stored, for example, in the profile database 218. Similarly, when a representative of an organization initially registers the organization with the social networking service, the representative may be prompted to provide certain information about the organization. This information may be stored, for example, in the profile database 218, or another database (not shown). In some embodiments, the profile data may be processed (e.g., in the background or offline) to generate various derived profile data. For example, if a member has provided information about various job titles that the member has held with the same organization or different organizations, and for how long, this information can be used to infer or derive a member profile attribute indicating the member's overall seniority level, or seniority level within a particular organization. In some embodiments, importing or otherwise accessing data from one or more externally hosted data sources may enrich profile data for both members and organizations. For instance, with organizations in particular, financial data may be imported from one or more external data sources and made part of an organization's profile. This importation of organization data and enrichment of the data will be described in more detail later in this document.

Once registered, a user may invite other members, or be invited by other members, to connect via the social networking service. A "connection" may constitute a bilateral agreement by the users, such that both users acknowledge the establishment of the connection. Similarly, in some embodiments, a user may elect to "follow" another user. In contrast to establishing a connection, the concept of "following" another user typically is a unilateral operation and, at least in some embodiments, does not require acknowledgement or approval by the user that is being followed. When one user follows another, the user who is following may receive status updates (e.g., in an activity or content stream) or other messages published by the user being followed, relating to various activities undertaken by the user being followed. Similarly, when a user follows an organization, the user becomes eligible to receive messages or status updates published on behalf of the organization. For instance, messages or status updates published on behalf of an organization that a user is following will appear in the user's personalized data feed, commonly referred to as an activity stream or content stream. In any case, the various associations and relationships that the users establish with other users, or with other entities and objects, are stored and maintained within a social graph in a social graph database 220.

As users interact with the various applications 120, services, and content made available via the social networking service, the users' interactions and behavior (e.g., content viewed, links or buttons selected, messages responded to, etc.) may be tracked, and information concerning the users' activities and behavior may be logged or stored, for example, as indicated in FIG. 2, by the user activity and behavior database 222. This logged activity information may then be used by the search engine 216 to determine search results for a search query.

In some embodiments, the databases 218, 220, and 222 may be incorporated into the database(s) 126 in FIG. 1. However, other configurations are also within the scope of the present disclosure.

Although not shown, in some embodiments, the social networking system 210 provides an API module via which applications 120 and services can access various data and services provided or maintained by the social networking service. For example, using an API, an application may be able to request and/or receive one or more recommendations. Such applications 120 may be browser-based applications 120, or may be operating system-specific. In particular, some applications 120 may reside and execute (at least partially) on one or more mobile devices (e.g., phone or tablet computing devices) with a mobile operating system. Furthermore, while in many cases the applications 120 or services that leverage the API may be applications 120 and services that are developed and maintained by the entity operating the social networking service, nothing other than data privacy concerns prevents the API from being provided to the public or to certain third parties under special arrangements, thereby making the navigation recommendations available to third-party applications 128 and services.

Although the search engine 216 is referred to herein as being used in the context of a social networking service, it is contemplated that it may also be employed in the context of any website or online services. Additionally, although features of the present disclosure are referred to herein as being used or presented in the context of a web page, it is contemplated that any user interface view (e.g., a user interface on a mobile device or on desktop software) is within the scope of the present disclosure.

In an example embodiment, when user profiles are indexed, forward search indexes are created and stored. The search engine 216 facilitates the indexing and searching for content within the social networking service, such as the indexing and searching for data or information contained in the data layer, such as profile data (stored, e.g., in the profile database 218), social graph data (stored, e.g., in the social graph database 220), and member activity and behavior data (stored, e.g., in the member activity and behavior database 222), as well as job postings. The search engine 216 may collect, parse, and/or store data in an index or other similar structure to facilitate the identification and retrieval of information in response to received queries for information. This may include, but is not limited to, forward search indexes, inverted indexes, N-gram indexes, and so on.

For purposes of this document, the combining of deep learning knowledge discovery with GAME modeling is described with respect to models pertaining to job recommendations in a social networking service. Nevertheless, one of ordinary skill in the art will recognize that these techniques can be applied to other types of models in social networking services, such as feed recommendations, profile recommendations, course suggestions, etc.

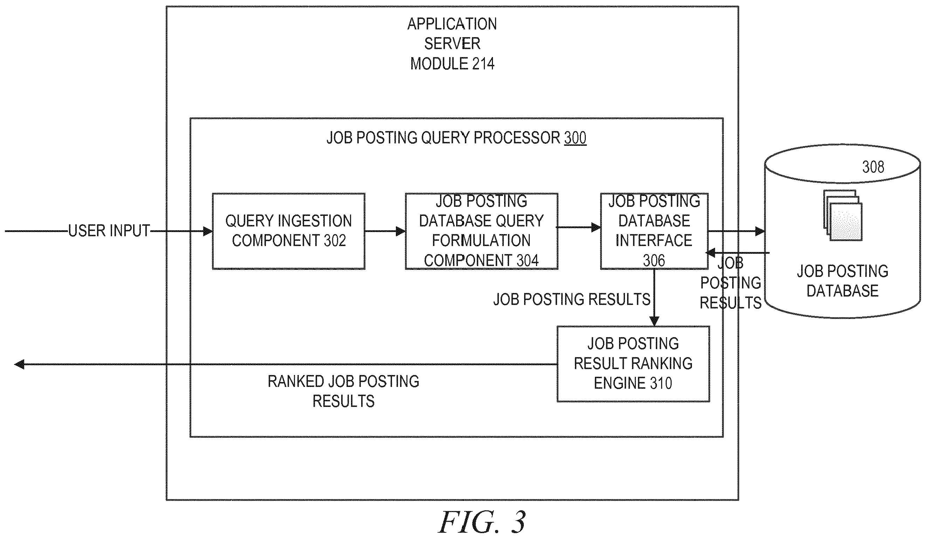

FIG. 3 is a block diagram illustrating application server module 214 of FIG. 2 in more detail, in accordance with an example embodiment. While in many embodiments, the application server module 214 will contain many subcomponents used to perform various different actions within the social networking system, in FIG. 3 only those components that are relevant to the present disclosure are depicted. A job posting query processor 300 comprises a query ingestion component 302, which receives a user input "query" related to a job posting search via a user interface (not pictured). Notably, this user input may take many forms. In some example embodiments, the user may explicitly describe a job posting search query, such as by entering one or more keywords or terms into one or more fields of a user interface screen. In other example embodiments, the job posting query may be inferred based on one or more user actions, such as selection of one or more filters, other job posting searches by the user, searches for other users or entities, etc.

This "query" may be sent to a job posting database query formulation component 304, which formulates an actual job posting database query, which will be sent, via a job posting database interface 306, to job posting database 308. Job posting results responsive to this job posting database query may then be sent to the job posting result ranking engine 310, again via the job posting database interface 306. The job posting result ranking engine 310 then ranks the job posting results and sends the ranked job posting results back to the user interface for display to the user.

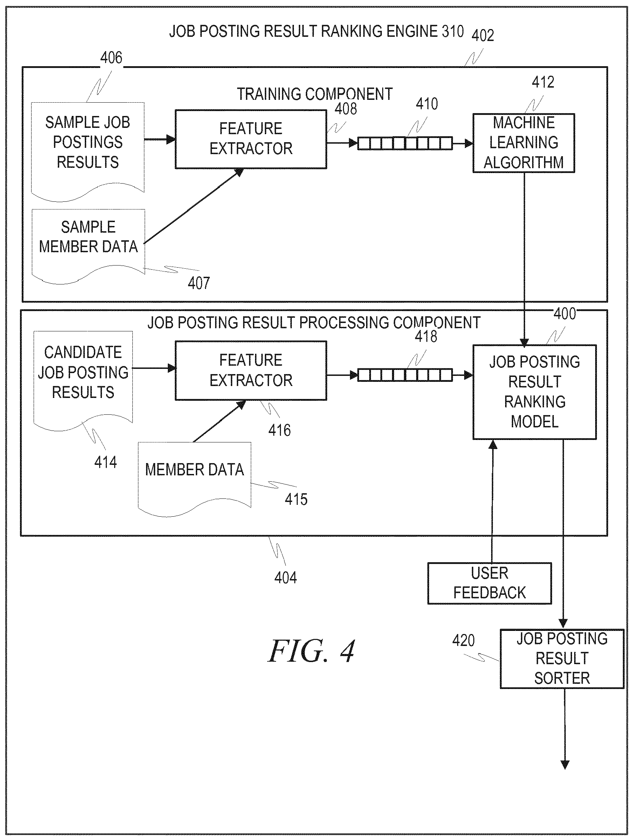

FIG. 4 is a block diagram illustrating job posting result ranking engine 310 of FIG. 3 in more detail, in accordance with an example embodiment. The job posting result ranking engine 310 may use machine learning techniques to learn a job posting result ranking model 400, which can then be used to rank actual job posting results from the job posting database 308.

The job posting result ranking engine 310 may comprise a training component 402 and a job posting result processing component 404. The training component 402 feeds sample job postings results 406 and sample member data 407 into a feature extractor 408 that extracts one or more features 410 for the sample job postings results 406 and sample member data 407. The sample job postings results 406 may each include job postings results produced in response to a particular query as well as one or more labels, such as a job posting application likelihood score, which is a score indicating a probability that a user with corresponding sample member data 407 will apply for the job associated with the corresponding sample job postings result 406.

Sample user data 407 may include, for example, a history of job searches and resulting expressions of interest (such as clicking on job posting results or applications to corresponding jobs) in particular job posting results for particular users. In some example embodiments, sample user data 407 can also include other data relevant for personalization of the query results to the particular user, such as a user profile for the member or a history of other user activity.

A machine learning algorithm 412 produces the job posting result ranking model 400 using the extracted features 410 along with the one or more labels. In the job posting result processing component 404, candidate job postings results 414 resulting from a particular query are fed to a feature extractor 416 along with member data 415. The feature extractor 416 extracts one or more features 418 from the candidate job postings results 414 and member data 415. These features 418 are then fed to the job posting result ranking model 400, which outputs a job posting application likelihood score for each candidate job postings result for the particular query.

This job posting application likelihood score for each candidate job posting result may then be passed to a job posting result sorter 420, which may sort the candidate job postings results 414 based on their respective job posting application likelihood scores.

It should be noted that the job posting result ranking model 400 may be periodically updated via additional training and/or user feedback. The user feedback may be either feedback from members performing searches, or from companies corresponding to the job postings. The feedback may include an indication about how successful the job posting result ranking model 400 is in predicting member interest in the job posting results presented.

The machine learning algorithm 412 may be selected from among many different potential supervised or unsupervised machine learning algorithms 412. Examples of supervised learning algorithms include artificial neural networks, Bayesian networks, instance-based learning, support vector machines, random forests, linear classifiers, quadratic classifiers, k-nearest neighbor, decision trees, and hidden Markov models. Examples of unsupervised learning algorithms include expectation-maximization algorithms, vector quantization, and information bottleneck method. In an example embodiment, a multi-class logistical regression model is used.

In an example embodiment, the machine learning algorithm 412 may actually comprise one or more machine learning algorithms that train three separate models that may be combined in order to form the job posting result ranking model 400.

Of course, the above techniques can be extended to other types of models than ranking models, such as job posting result ranking model 400. For example, rather than use the predictions to rank job results in response to a query, a system could use the predictions to recommend one or more job postings to a user without the user expressly requesting a job search. Furthermore, the techniques can be extended to other types of predictions for items other than job postings or job results, such as feed objects.

As described briefly above, in some example embodiments, the scalability bottleneck is overcome by applying parallelized block coordinate descent under a bulk synchronous parallel (BSP) paradigm. Traditionally, the fitting algorithms for random effect models required random effect coefficients $\Gamma$ to be integrated out either analytically or numerically, which becomes infeasible when facing industry-scale large data sets. Similarity, both deterministic and Markov chain Monte Carlo (MCMC) sampling that operate on $\Gamma$ as a whole become cumbersome.

In an example embodiment, a parallel block-wise coordinate descent-based iterative conditional mode process may be used, where the posterior mode of the random effect coefficients $\Gamma_r$ for each random effect $r$, is treated as a block-wise coordinate to be optimized in the space of unknown parameters. Given the scores, the optimization problems for updating the fixed effects $b$ and the random effects $\Gamma_r$ are as follows:

$$b = \arg\max_{b} \left\{ \log p(b) + \sum_{n \in \Omega} \log p \left( y_n | S_n - x'_n b^{old} + x'_n b \right) \right\}$$

$$\Upsilon_{rl} = \arg\max_{\Upsilon_{rl}} \left\{ \log p(\Upsilon_{rl}) + \sum_{n | i(r,n)=l} \log p \left( y_n | S_n - z'_{rn} \Upsilon_{rl}{}^{old} + z'_{rn} \Upsilon_{rl} \right) \right\}$$

Incremental updates for $S = \{S_n\}_{n \in \Omega}$ may be performed for computational efficiency. More specifically, when the fixed effects $b$ get updated, $S_n^{new} = S_n^{old} - x'_n b^{old} + x'_n b^{new}$ may be applied for updating $s$, and when the random effects $\Gamma$ get updated, $S_n^{new} = S_n^{old} - z'_{rn} \Upsilon_{r,i(r,n)}^{old} + z'_{rn} \Upsilon_{r,i(r,n)}^{new}$ may be used.

At iteration $k$ of the model algorithm: $(E[y_{mjt}]) = x'_{mjt}b + s'_j\alpha_m + q'_m\beta_j$, let $s^k$ denote the current value of $S = \{S_n\}_{n \in \Omega}$. Let $P$ denote the dimension of fixed effect feature space, i.e., $x_n \in \mathbb{R}^P$ and $P_r$ denote the dimension of the feature space for random effect $r$, i.e., $z_{rn} \in \mathbb{R}^{Pr}$. $C$ denotes the overall dimension of the feature space, for example $C = P + \sum_{r \in R} P_r N_r$, where $N_r$ denotes the number of random effects of type $r$ (e.g., number of users). For the set of sample responses $y(\Omega) = \{y_n\}_{n \in \Omega}$, $|\Omega|$ is used to denote the size of $\Omega$, i.e., the total number of training samples. Additionally, $|\mathcal{R}|$ is the number of types of random effects, and $M$ is the number of computing nodes in the cluster. These numbers can be used to compute the network input/output cost of the disclosued techniques, with this network input/output cost typically being one of the major technical challenges in scaling up in a distributed computing environment.

The process involves preparing the training data for fixed effect model training with scores, updating the fixed effect coefficients ($b$), and updating the scores s. Then the training data for random effects model training is prepared with scores and the random effect coefficients and scores are updated. The random effects model training and updating can then continue for each additional random effects model.

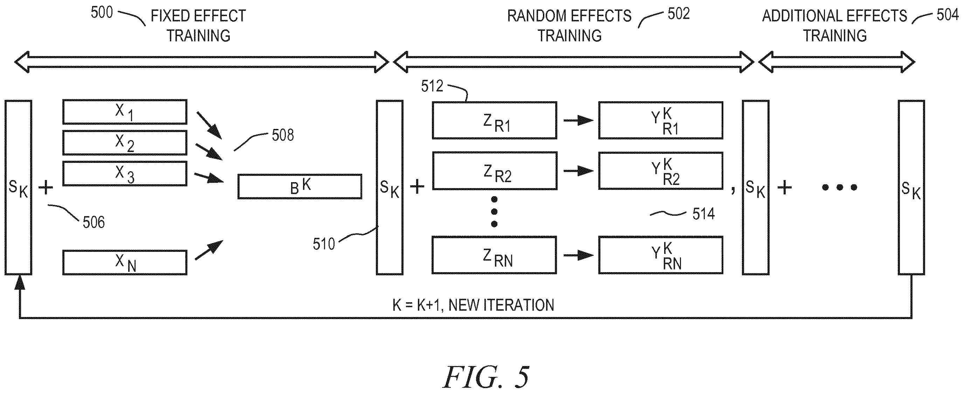

FIG. 5 is a block diagram illustrating the $k$th iteration of a parallelized block coordinate descent under a bulk synchronous parallel (BSP) paradigm, in accordance with an example embodiment. As can be seen, there is the fixed effects training 500, the random effects training 502, and any additional effects training 504. The process begins with addressing the details of updating the fixed effect $b$ at iteration $k$. Here, at 506, the training data is prepared with both the feature set $x_n$ and the latest score $S_n^k$ and they are partitioned into $M$ nodes. Given the training data, numerous types of distributed algorithms can be applied to learn $b$. For example, the gradient of $b$ at each sample $n$ can be computed and aggregated from each node to the master node. The gradient may be aggregated in a parallel reduce operation, performed by one or more executor nodes, with the final product being known to the master node. The master node updates $b$. This is depicted at 508 in FIG. 5. The new coefficients $b^{new}$ are then broadcast back to each node together with $b^{old}$ to update the score s as in $S_n^{new} = S_n^{old} - x'_n b^{old} + x'_n b^{new}$, in order to prepare for the next effect's update. This is depicted at 510 in FIG. 5. Since the main network communication here is the transmission of $b$ from the master node to the worker nodes, the overall network communication cost for one iteration of updating the fixed effects is $\mathcal{O}$ ($MP$). In some cases, convergence can be improved by updating $b$ multiple times before updating the random effects, for each iteration.

The main technical challenge in designing a scalable architecture for GLMix on data sets with a large number of random effects is that the dimension of the random effect coefficient space can potentially be as large as $N_r P_r$. Therefore, if the same approach as the one used in updating fixed effects is used, the network communication cost for updating the random effects for $r$ becomes $MP_r N_r$. Given some data of moderate size, for example, if $N_r = 10^6$, $P_r = 10^5$ and a cluster with $M = 100$, the network input/output cost amounts to $10^{13}$. As a result, one key to making the process scalable is to avoid communicating or broadcasting the random effect coefficient across the computing nodes in the cluster.

Before the random effect updating phase and as a pre-processing step, for each random effect $r$ and ID $l$, the feature vectors $z_{rn}$ are combined to form a feature matrix $Z_{rl}$, which comprises all of the $z_{rn}$ that satisfy $i(r, n) = l$. At iteration $k$ and for random effect $r$, the current values of $S = S^k_{n\,n\in\Omega}$ may be shuffled using the same strategy, i.e., or ID $l$, $S^k_n$ be grouped to form a vector $S^k_l$, which comprises all of the $S^k_n$ that satisfy $i(r, n) = l$. With the right partitioning strategies, $S^k_l$ can be made to collocate with the corresponding feature matrix $Z_{rl}$, to prepare the training data for updating the random effects r using

$$\Upsilon_{rl} = \arg\max_{\Upsilon_{rl}}\left\{ log\wp(\Upsilon_{rl}) + \sum_{n|i(r,n)=l} log\wp\left(y_n|S_n - z'_{rn}\Upsilon_{rl}{}^{old} + z'_{rn}\Upsilon_{rl}\right)\right\}$$

This is depicted at 512 in FIG. 5.

With the training data ready for each ID $l$, an optimizer can be applied again to solve the optimization problem locally, such that the random effects $\Upsilon_{rl}$ can be learned in parallel without any additional network communication cost.

It should be noted that, because both the coefficients and data collocate in the same node, the scores can be updated locally within the same step, as depicted at 514 in FIG. 5. It should also be noted that, during the whole process, the random effect coefficients $\Upsilon_{rl}$ live with the data and would never get communicated through the network; only $S_i$ would get shuffled around the nodes. As a result, the overall network communication cost for one iteration of updating one random effect is $\mathcal{O}(|\Omega|)$, and $\mathcal{O}(|\mathcal{R}||\Omega|)$ for $|\mathcal{R}|$ random effects.

Since the optimization problem can be solved locally, it is possible to further reduce the memory complexity $C$. Although the overall feature space size is $P_r$ for random effect $r$, sometimes the underlying dimension of the feature matrix $Z_{rl}$ could be smaller than $P_r$, due to the lack of support for certain features. For example, a member who is a software engineer is unlikely to be served jobs with the required skill "medicine". Hence there will not be any data for the feature/job skill=medicine for this user's random effects, and in such a scenario, $Z_{rl}$ would end up with an empty column. As a result, for each random effect $r$ and ID $l$, $Z_{rl}$ can be condensed by removing all the empty columns and reindexing the features to form a more compact feature matrix, which would also reduce the size of random effect coefficients $\Upsilon_{rl}$ and potentially improve the overall efficiency of solving the local optimization problem.

The result is that the fixed effects training 500 trains the fixed effects model and produces some residuals. These residuals are then used in the random effects training 502 to train the random effects model, which also produces some residuals. These residuals are then used in an additional effects training 504. This process iterates, passing the residuals from the additional effects training 504 back to the fixed effects training 500. These iterations continue until convergence occurs.

The residuals at each stage are the errors produced by whatever model is used by each stage. This allows any type of model to be used at any stage. Thus, the fixed effects model can be a completely different type of model than the random effects model. The residuals are the difference between the values produced by the model and a target.

It should be noted that the training process described above with respect to FIG. 5 can be applied to linear or non-linear models, or any combination thereof.

In an example embodiment, deep learning may be integrated with the GAMe model through transfer learning. In this case, deep learning generated features are injected into different parts of GAME models. Deep learning features are represented as additional features for each training instance, for example $x_{deepi} = f(x_i|\theta)$, where $f$ is a deep learning model, $x_i$ is the input feature vector for instance $i$, and $\theta$ are the parameters for the deep learning model.

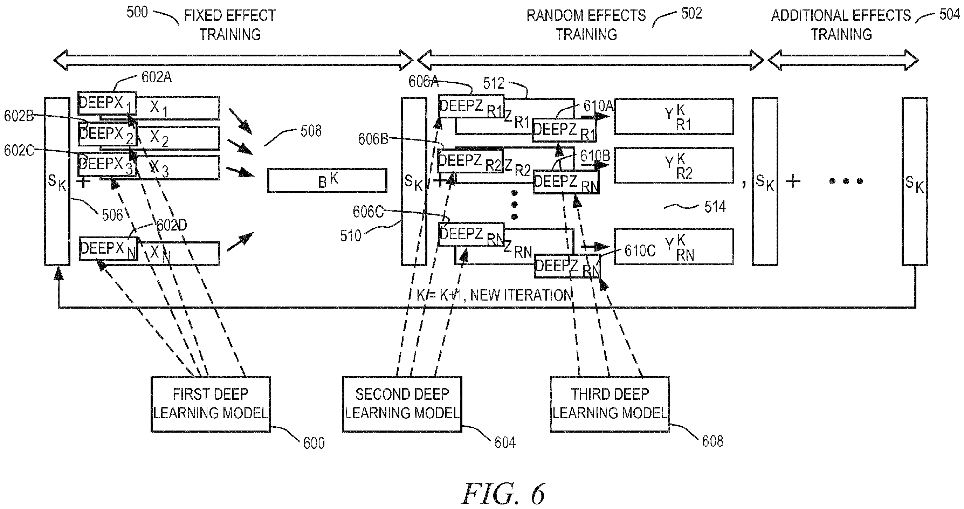

FIG. 6 is a block diagram illustrating the kth iteration of a parallelized block coordinate descent under a bulk synchronous parallel (BSP) paradigm, modified by injecting features generated from deep learning models, in accordance with an example embodiment. Here the GAME paradigm of FIG. 5 is modified by having features generated by one or more deep learning models fed into various places in the GAME paradigm to augment the GAME features. This injection of features may occur at many different places in the GAME paradigm. In this example, features generated by a first deep learning model 600, such as deep features 602A-602D, are used to augment features in a fixed effect training portion 500 of the paradigm, whereas features generated by a second deep learning model 604, such as deep features 606A-606C, and features generated by a third deep learning model 608, such as deep features 610A-610C are used to augment features in a random effects training portion 502 of the paradigm.

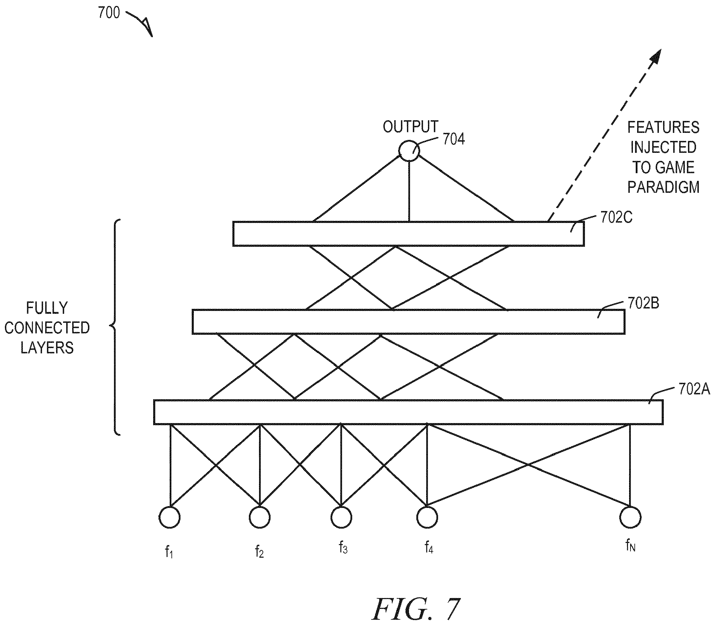

FIG. 7 is a block diagram illustrating a deep learning model 700, in accordance with an example embodiment. The deep learning model 700 may comprise a plurality of fully connected layers 702A-702C. Fully connected layers 702A-702C connect every neuron in one layer to every neuron in another layer. Input to fully connected layer 702A may be a plurality of features $(f_1...f_n)$ that may be relevant to some sort of output prediction 704. For example, the output prediction 704 may be whether or not a particular member will click on a particular feed item. The features in such an example might include member features, such as those gathered from the member's profile and usage history, and feed item features, such as those gathered by data and metadata about the feed item (e.g., text of the feed item, type of the feed item, etc.). The fully connected layers 702A-702C may progressively refine the features in that the features used by fully connected layer 702C may only be a subset of the features used by fully connected layer 702A.

It should be noted that there may be other layers in the deep learning model 700 that are not pictured, such as input and output layers, convolutional layers (which apply a convolutional operation to the input), pooling layers (which combine the outputs of neuron clusters at one layer into a single neuron in the next layer), and normalization layers. Convolutional layers, pooling layers, fully connected layers 702, and normalization layers are known collectively as hidden layers. It should also be noted that there may be any number of fully connected layers 702, and embodiments are thus not limited to the three depicted here.

In an example embodiment, the features learned at the final fully connected layer 702C are injected into the GAME paradigm, as described with respect to FIG. 6 above. This is because the final fully connected layer 702C is the closest to the output prediction 704 and thus the features learned at this layer are likely to be the most relevant to the output prediction 704.

In an example embodiment, rather than treating the deep learning aspects as a fixed black box, the weights for at least some of the deep learning models(s) may be updated using feedback from the GAME paradigm. This may be known as joint learning, because the GAME paradigm learns from the deep learning aspect while the deep learning aspect learns from the GAME paradigm.

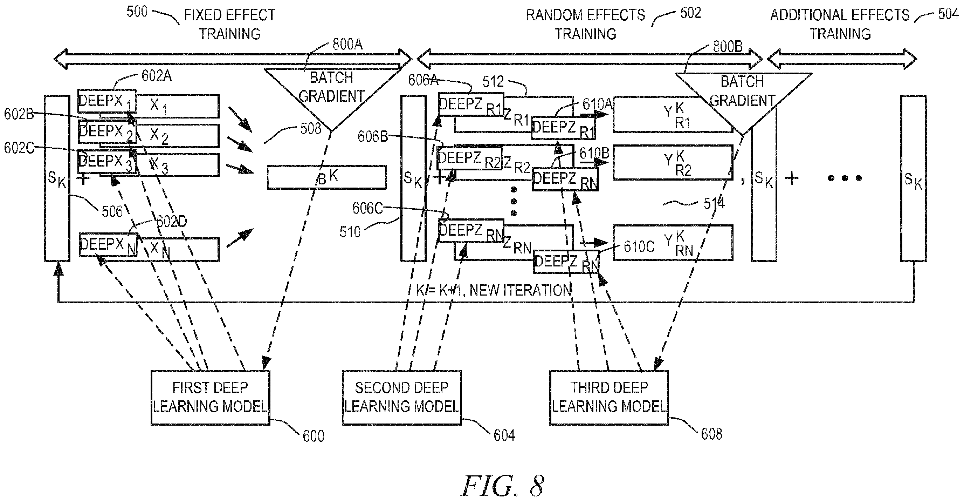

FIG. 8 is a block diagram illustrating the kth iteration of a parallelized block coordinate descent under a bulk synchronous parallel (BSP) paradigm, modified by injecting features generated from deep learning models using joint learning, in accordance with an example embodiment. This diagram is similar to that of FIG. 6, except gradients calculated during batch gradient descent 800A, 800B at two different places in the GAME paradigm are fed back into the first and third deep learning models 600, 608, respectively. Notably, the second deep learning model 604 does not utilize any such feedback, and thus it is not performing joint learning. This illustrates how a combination of joint learning and non-joint learning deep learning models may be used in a single system. In an example embodiment, the weights from the batch gradient descents 800A, 800B are used to update the first fully connected layer 702 in the corresponding deep learning model 600, 608. This may correspond to, or example, layer 702A of FIG. 7.

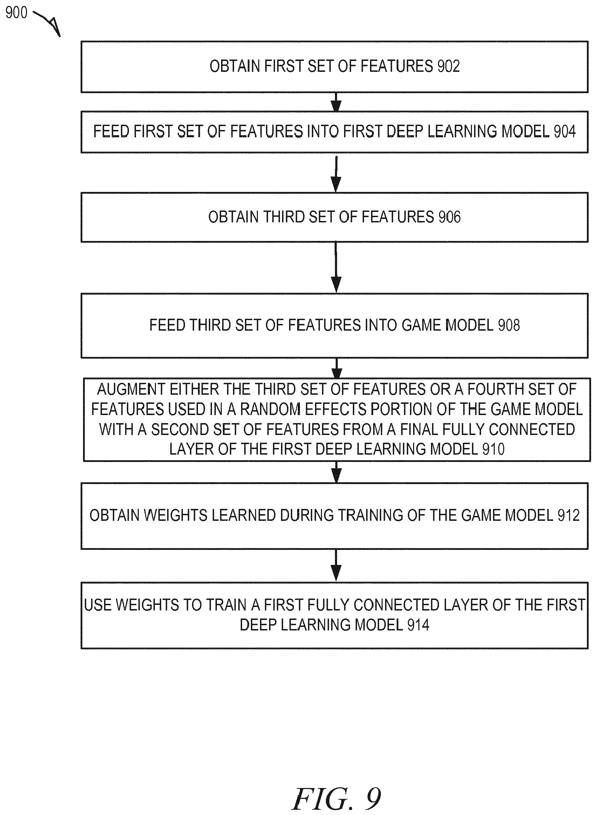

FIG. 9 is a flow diagram illustrating a method 900 for training a generalized additive mixed effect model in accordance with an example embodiment. At operation 902, a first set of features derived from data in a social networking service is obtained. At operation 904, the first set of features is fed into a first deep learning model 600 to generate a first prediction. The first deep learning model 600 comprises a plurality of fully connected layers 702 of neurons. The first prediction is generated by passing the first set of features to a first of the plurality of fully connected layers 702, which successively passes features to another of the plurality of fully connected layers 702 until reaching a final of the plurality of fully connected layers 702, which outputs the first prediction using a second set of features.

At operation 906, a third set of features derived from data in the social networking service is obtained. In some example embodiments, the third set of features is identical to the first set of features. At operation 908, the third set of features is fed into a generalized additive mixed effect (GAME) model. The GAME model comprises a fixed effect training portion and a random effects training portion. The fixed effect training portion uses the third set of features and utilizes batch gradient descent to output a second prediction and a residual. The random effects training portion uses a fourth set of features and the residual to output a third prediction.

At operation 910, during training of the fixed effect training portion and the random effects training portion, either the third set of features or fourth set of features is augmented with the second set of features from the first deep learning model 600, causing the GAME model to be trained based on the second set of features learned by the first deep learning model 600. Similar techniques may be used to train additional portions of the GAME model using features learned in other deep learning models.

At operation 912, weights learned by the batch gradient descent of either the fixed effects training portion or the random effects training portion are obtained. At operation 914, the weights are used to train the first fully connected layer 702A of the first deep learning model 600.

The first prediction is attempting to determine a likelihood of a particular occurrence, which can be thought of as a certain type of output. For example, the likelihood of an occurrence may be the likelihood that a user will engage with a particular feed item. The second and/or third predictions may then also be predicting that same type of output.

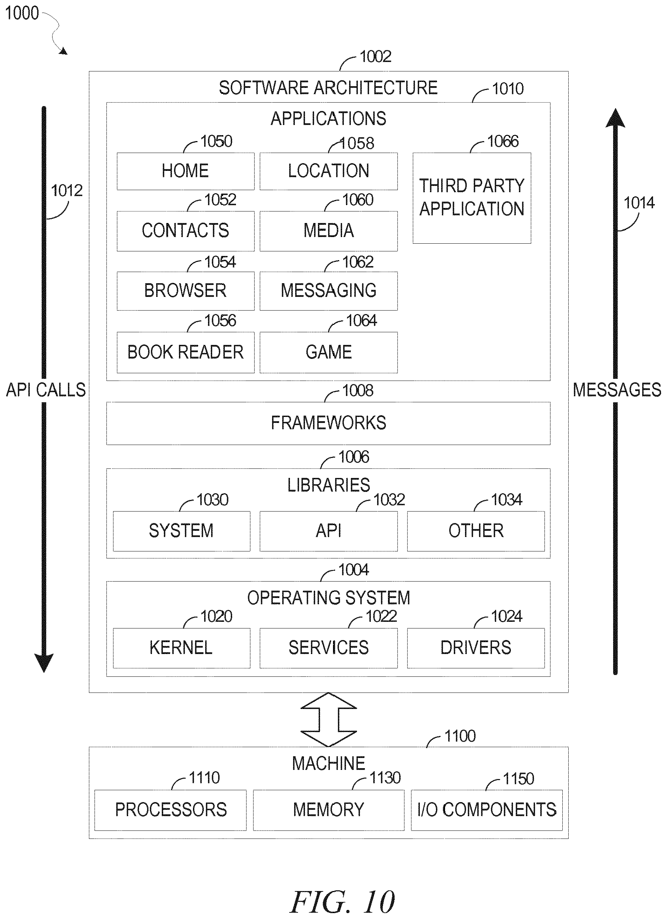

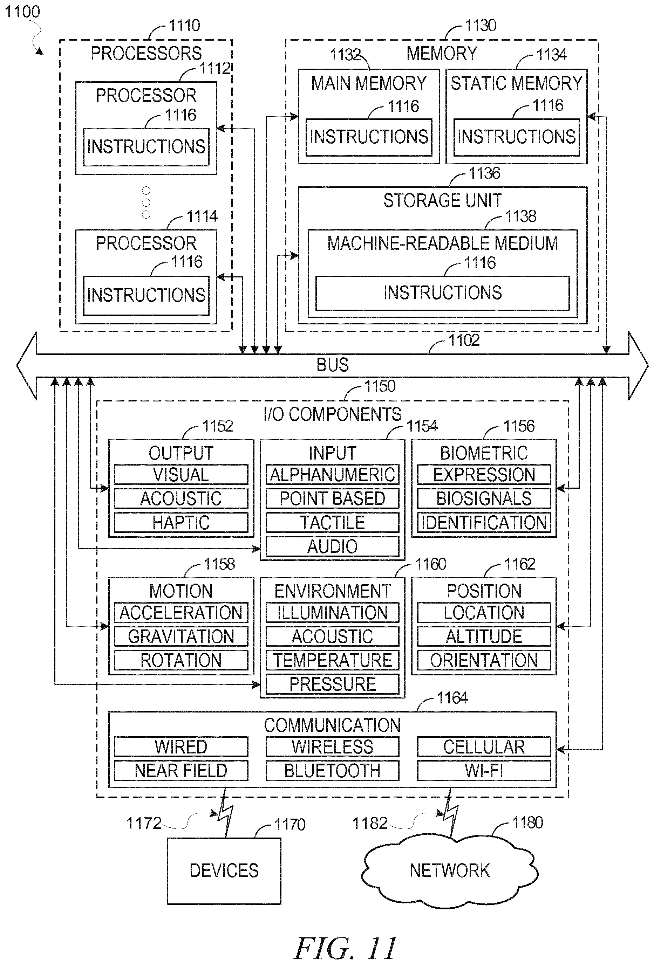

FIG. 10 is a block diagram 1000 illustrating a software architecture 1002, which can be installed on any one or more of the devices described above. FIG. 10 is merely a non-limiting example of a software architecture, and it will be appreciated that many other architectures can be implemented to facilitate the functionality described herein. In various embodiments, the software architecture 1002 is implemented by hardware such as a machine 1100 of FIG. 11 that includes processors 1110, memory 1130, and input/output (I/O) components 1150. In this example architecture, the software architecture 1002 can be conceptualized as a stack of layers where each layer may provide a particular functionality. For example, the software architecture 1002 includes layers such as an operating system 1004, libraries 1006, frameworks 1008, and applications 1010. Operationally, the applications 1010 invoke API calls 1012 through the software stack and receive messages 1014 in response to the API calls 1012, consistent with some embodiments.

In various implementations, the operating system 1004 manages hardware resources and provides common services. The operating system 1004 includes, for example, a kernel 1020, services 1022, and drivers 1024. The kernel 1020 acts as an abstraction layer between the hardware and the other software layers, consistent with some embodiments. For example, the kernel 1020 provides memory management, processor management (e.g., scheduling), component management, networking, and security settings, among other functionality. The services 1022 can provide other common services for the other software layers. The drivers 1024 are responsible for controlling or interfacing with the underlying hardware, according to some embodiments. For instance, the drivers 1024 can include display drivers, camera drivers, BLUETOOTH® or BLUETOOTH® Low Energy drivers, flash memory drivers, serial communication drivers (e.g., Universal Serial Bus (USB) drivers), Wi-Fi® drivers, audio drivers, power management drivers, and so forth.

In some embodiments, the libraries 1006 provide a low-level common infrastructure utilized by the applications 1010. The libraries 1006 can include system libraries 1030 (e.g., C standard library) that can provide functions such as memory allocation functions, string manipulation functions, mathematic functions, and the like. In addition, the libraries 1006 can include API libraries 1032 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 1006 can also include a wide variety of other libraries 1034 to provide many other APIs to the applications 1010.

The frameworks 1008 provide a high-level common infrastructure that can be utilized by the applications 1010, according to some embodiments. For example, the frameworks 1008 provide various graphic user interface (GUI) functions, high-level resource management, high-level location services, and so forth. The frameworks 1008 can provide a broad spectrum of other APIs that can be utilized by the applications 1010, some of which may be specific to a particular operating system 1004 or platform.

In an example embodiment, the applications 1010 include a home application 1050, a contacts application 1052, a browser application 1054, a book reader application 1056, a location application 1058, a media application 1060, a messaging application 1062, a game application 1064, and a broad assortment of other applications, such as a third-party application 1066. According to some embodiments, the applications 1010 are programs that execute functions defined in the programs. Various programming languages can be employed to create one or more of the applications 1010, structured in a variety of manners, such as object-oriented programming languages (e.g., Objective-C, Java, or C++) or procedural programming languages (e.g., C or assembly language). In a specific example, the third-party application 1066 (e.g., an application developed using the ANDROID™ or IOS™ software development kit (SDK) by an entity other than the vendor of the particular platform) may be mobile software running on a mobile operating system such as IOS™, ANDROID™, WINDOWS® Phone, or another mobile operating system. In this example, the third-party application 1066 can invoke the API calls 1012 provided by the operating system 1004 to facilitate functionality described herein.

FIG. 11 illustrates a diagrammatic representation of a machine 1100 in the form of a computer system within which a set of instructions may be executed for causing the machine to perform any one or more of the methodologies discussed herein, according to an example embodiment. Specifically, FIG. 11 shows a diagrammatic representation of the machine 1100 in the example form of a computer system, within which instructions 1116 (e.g., software, a program, an application 1010, an applet, an app, or other executable code) for causing the machine 1100 to perform any one or more of the methodologies discussed herein may be executed. For example, the instructions 1116 may cause the machine 1100 to execute the method 900 of FIG. 9. Additionally, or alternatively, the instructions 1116 may implement FIGs. 1-9, and so forth. The instructions 1116 transform the general, non-programmed machine 1100 into a particular machine 1100 programmed to carry out the described and illustrated functions in the manner described. In alternative embodiments, the machine 1100 operates as a standalone device or may be coupled (e.g., networked) to other machines. In a networked deployment, the machine 1100 may operate in the capacity of a server machine or a client machine in a server-client network environment, or as a peer machine in a peer-to-peer (or distributed) network environment. The machine 1100 may comprise, but not be limited to, a server computer, a client computer, a PC, a tablet computer, a laptop computer, a netbook, a set-top box (STB), a portable digital assistant (PDA), an entertainment media system, a cellular telephone, a smartphone, a mobile device, a wearable device (e.g., a smart watch), a smart home device (e.g., a smart appliance), other smart devices, a web appliance, a network router, a network switch, a network bridge, or any machine capable of executing the instructions 1116, sequentially or otherwise, that specify actions to be taken by the machine 1100. Further, while only a single machine 1100 is illustrated, the term "machine" shall also be taken to include a collection of machines 1100 that individually or jointly execute the instructions 1116 to perform any one or more of the methodologies discussed herein.

The machine 1100 may include processors 1110, memory 1130, and I/O components 1150, which may be configured to communicate with each other such as via a bus 1102. In an example embodiment, the processors 1110 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 1112 and a processor 1114 that may execute the instructions 1116. The term "processor" is intended to include multi-core processors that may comprise two or more independent processors (sometimes referred to as "cores") that may execute instructions 1116 contemporaneously. Although FIG. 11 shows multiple processors 1110, the machine 1100 may include a single processor with a single core, a single processor with multiple cores (e.g., a multi-core processor), multiple processors with a single core, multiple processors with multiple cores, or any combination thereof.

The memory 1130 may include a main memory 1132, a static memory 1134, and a storage unit 1136, all accessible to the processors 1110 such as via the bus 1102. The main memory 1132, the static memory 1134, and the storage unit 1136 store the instructions 1116 embodying any one or more of the methodologies or functions described herein. The instructions 1116 may also reside, completely or partially, within the main memory 1132, within the static memory 1134, within the storage unit 1136, within at least one of the processors 1110 (e.g., within the processor's cache memory), or any suitable combination thereof, during execution thereof by the machine 1100.

The I/O components 1150 may include a wide variety of components to receive input, provide output, produce output, transmit information, exchange information, capture measurements, and so on. The specific I/O components 1150 that are included in a particular machine 1100 will depend on the type of machine 1100. For example, portable machines such as mobile phones will likely include a touch input device or other such input mechanisms, while a headless server machine will likely not include such a touch input device. It will be appreciated that the I/O components 1150 may include many other components that are not shown in FIG. 11. The I/O components 1150 are grouped according to functionality merely for simplifying the following discussion, and the grouping is in no way limiting. In various example embodiments, the I/O components 1150 may include output components 1152 and input components 1154. The output components 1152 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1154 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 1150 may include biometric components 1156, motion components 1158, environmental components 1160, or position components 1162, among a wide array of other components. For example, the biometric components 1156 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1158 may include acceleration sensor components (e.g., accelerometer), gravitation sensor components, rotation sensor components (e.g., gyroscope), and so forth. The environmental components 1160 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 1162 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1150 may include communication components 1164 operable to couple the machine 1100 to a network 1180 or devices 1170 via a coupling 1182 and a coupling 1172, respectively. For example, the communication components 1164 may include a network interface component or another suitable device to interface with the network 1180. In further examples, the communication components 1164 may include wired communication components, wireless communication components, cellular communication components, near field communication (NFC) components, Bluetooth® components (e.g., Bluetooth® Low Energy), Wi-Fi® components, and other communication components to provide communication via other modalities. The devices 1170 may be another machine or any of a wide variety of peripheral devices (e.g., a peripheral device coupled via a USB).

Moreover, the communication components 1164 may detect identifiers or include components operable to detect identifiers. For example, the communication components 1164 may include radio frequency identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1164, such as location via Internet Protocol (IP) geolocation, location via Wi-Fi® signal triangulation, location via detecting an NFC beacon signal that may indicate a particular location, and so forth.

EXECUTABLE INSTRUCTIONS AND MACHINE STORAGE MEDIUM

The various memories (i.e., 1130, 1132, 1134, and/or memory of the processor(s) 1110) and/or the storage unit 1136 may store one or more sets of instructions 1116 and data structures (e.g., software) embodying or utilized by any one or more of the methodologies or functions described herein. These instructions (e.g., the instructions 1116), when executed by the processor(s) 1110, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions 1116 and/or data. The terms shall accordingly be taken to include, but not be limited to, solid-state memories, and optical and magnetic media, including memory internal or external to the processors 1110. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

TRANSMISSION MEDIUM

In various example embodiments, one or more portions of the network 1180 may be an ad hoc network, an intranet, an extranet, a VPN, a LAN, a WLAN, a WAN, a WWAN, a MAN, the Internet, a portion of the Internet, a portion of the PSTN, a plain old telephone service (POTS) network, a cellular telephone network, a wireless network, a Wi-Fi® network, another type of network, or a combination of two or more such networks. For example, the network 1180 or a portion of the network 1180 may include a wireless or cellular network, and the coupling 1182 may be a Code Division Multiple Access (CDMA) connection, a Global System for Mobile communications (GSM) connection, or another type of cellular or wireless coupling. In this example, the coupling 1182 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data-transfer technology.

The instructions 1116 may be transmitted or received over the network 1180 using a transmission medium via a network interface device (e.g., a network interface component included in the communication components 1164) and utilizing any one of a number of well-known transfer protocols (e.g., HTTP). Similarly, the instructions 1116 may be transmitted or received using a transmission medium via the coupling 1172 (e.g., a peer-to-peer coupling) to the devices 1170. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1116 for execution by the machine 1100, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

COMPUTER-READABLE MEDIUM

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

**Claims**

1. A system comprising:
   a computer-readable medium having instructions stored thereon, which, when executed by a processor, cause the system to:

   obtain a first set of features derived from data in a social networking service;
   feed the first set of features into a first deep learning model to generate a first prediction, the first deep learning model comprising a plurality of fully connected layers of neurons, the first prediction generated by passing the first set of features to a first of the plurality of fully connected layers, which successively passes features to another of the plurality of fully connected layers until reaching a final of the plurality of fully connected layers, which outputs the first prediction using a second set of features;
   obtain a third set of features derived from data in the social networking service;
   feed the third set of features into a generalized additive mixed effect (GAME) model, the GAME model comprising a fixed effect training portion and a random effects training portion, the fixed effect training portion using the third set of features, the random effects training portion using a fourth set of features; and
   during training of the fixed effect training portion and the random effects training portion, augment either the third set of features or fourth set of features with the second set of features from the first deep learning model, causing the GAME model to be trained based on the second set of features learned by the first deep learning model.

2. The system of claim 1, wherein the instructions further cause the system to:

   obtain weights learned by the batch gradient descent of either the fixed effects training portion or the random effects training portion; and
   use the weights to train the first fully connected layer of the first deep learning model.

3. The system of claim 1, wherein the instructions further cause the system to:

   obtain a fifth set of features derived from data in a social networking service;
   feed the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

4. The system of claim 3 wherein the instructions further cause the system to:
   during training of the fixed effect training portion and the random effects training portion, augment either the third set of features or fourth set of features with the sixth set of features from the second deep learning model, causing the GAME model to be trained based on the second set of features learned by the second deep learning model.

5. A computerized method comprising:

obtaining a first set of features derived from data in a social networking service;
feeding the first set of features into a first deep learning model to generate a first prediction, the first deep learning model comprising a plurality of fully connected layers of neurons, the first prediction generated by passing the first set of features to a first of the plurality of fully connected layers, which successively passes features to another of the plurality of fully connected layers until reaching a final of the plurality of fully connected layers, which outputs the first prediction using a second set of features;
obtaining a third set of features derived from data in the social networking service;
feeding the third set of features into a generalized additive mixed effect (GAME) model, the GAME model comprising a fixed effect training portion and a random effects training portion, the fixed effect training portion using the third set of features, the random effects training portion using a fourth set of features; and
during training of the fixed effect training portion and the random effects training portion, augmenting either the third set of features or fourth set of features with the second set of features from the first deep learning model, causing the GAME model to be trained based on the second set of features learned by the first deep learning model.

6. The computerized method of claim 5, further comprising:

obtaining weights learned by the batch gradient descent of either the fixed effects training portion or the random effects training portion; and
using the weights to train the first fully connected layer of the first deep learning model.

7. The computerized method of claim 5, further comprising:

obtaining a fifth set of features derived from data in a social networking service; and
feeding the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

8. The computerized method of claim 7, further comprising:
during training of the fixed effect training portion and the random effects training portion, augmenting either the third set of features or fourth set of features with the sixth set of features from the second deep learning model, causing the GAME model to be trained based on the second set of features learned by the second deep learning model.

9. The system of claim 1 or computerized method of claim 5, wherein the first prediction is predicting the same type of output as the third prediction.

10. A non-transitory machine-readable storage medium comprising instructions which, when implemented by one or more machines, cause the one or more machines to perform operations comprising:
obtaining a first set of features derived from data in a social networking service;

feeding the third set of features into a generalized additive mixed effect (GAME) model, the GAME model comprising a fixed effect training portion and a random effects training portion, the fixed effect training portion using the third set of features, the random effects training portion using a fourth set of features; and
obtaining a third set of features derived from data in the social networking service;
feeding the third set of features into a generalized additive mixed effect (GAME) model, the GAME model comprising a fixed effect training portion and a random effects training portion, the fixed effect training portion using the third set of features and utilizing batch gradient descent to output a second prediction and a residual, the random effects training portion using a fourth set of features and the residual to output a third prediction; and
during training of the fixed effect training portion and the random effects training portion, augmenting either the third set of features or fourth set of features with the second set of features from the first deep learning model, causing the GAME model to be trained based on the second set of features learned by the first deep learning model.

11. The non-transitory machine-readable storage medium of claim 10, wherein the operations further comprise:

obtaining weights learned by the batch gradient descent of either the fixed effects training portion or the random effects training portion; and
using the weights to train the first fully connected layer of the first deep learning model.

12. The non-transitory machine-readable storage medium of claim 10, wherein the operations further comprise:

obtaining a fifth set of features derived from data in a social networking service; and
feeding the fifth set of features into a second deep learning model to generate a fourth prediction, the second deep learning model comprising a second plurality of fully connected layers of neurons, the fourth prediction generated by passing the fifth set of features to a first of the second plurality of fully connected layers, which successively passes features to another of the second plurality of fully connected layers until reaching a final of the second plurality of fully connected layers, which outputs the fourth prediction using a sixth set of features.

13. The non-transitory machine-readable storage medium of claim 12, wherein the operations further comprise: during training of the fixed effect training portion and the random effects training portion, augmenting either the third set of features or fourth set of features with the sixth set of features from the second deep learning model, causing the GAME model to be trained based on the second set of features learned by the second deep learning model.

14. The system of claim 1, computerized method of claim 5, or non-transitory machine-readable storage medium of claim 10, wherein the first set of features and the second set of features are identical.

15. The system of claim 1, computerized method of claim 5, or non-transitory machine-readable storage medium of claim 10, wherein the first prediction is predicting the same type of output as the second prediction.

*FIG. 1*

FRONT
END

USER INTERFACE (e.g., WEB SERVER)
MODULE(S)                        212

USER INTERACTION DETECTION MODULE
                                 213

APPLICATION
LOGIC
LAYER

APPLICATION
SERVER
MODULE

                    214

SEARCH
ENGINE

                    216

SOCIAL NETWORKING SYSTEM    210

DATA
LAYER

218

PROFILE DATA
(e.g., MEMBER,
COMPANY,
SCHOOL)

220

SOCIAL GRAPH
DATA

222

MEMBER ACTIVITY
AND BEHAVIOR
DATA

*FIG. 2*

APPLICATION
SERVER
MODULE 214

JOB POSTING QUERY PROCESSOR 300

USER INPUT → QUERY INGESTION COMPONENT 302

JOB POSTING DATABASE QUERY FORMULATION COMPONENT 304

JOB POSTING DATABASE INTERFACE 306

JOB POSTING RESULTS

JOB POSTING RESULTS

308

JOB POSTING DATABASE

JOB POSTING RESULT RANKING ENGINE 310

RANKED JOB POSTING RESULTS

*FIG. 3*

EP 3 561 735 A1

JOB POSTING RESULT RANKING ENGINE 310 402

406

TRAINING COMPONENT

412

SAMPLE JOB POSTINGS RESULTS → FEATURE EXTRACTOR 408 → 410 → MACHINE LEARNING ALGORITHM

SAMPLE MEMBER DATA

407

JOB POSTING RESULT PROCESSING COMPONENT 400

418

CANDIDATE JOB POSTING RESULTS → FEATURE EXTRACTOR → JOB POSTING RESULT RANKING MODEL

416

414

MEMBER DATA

415

404

USER FEEDBACK

*FIG. 4*

420 → JOB POSTING RESULT SORTER

EP 3 561 735 A1

FIG. 5

*FIG. 6*

FIG. 7

*FIG. 8*

900

OBTAIN FIRST SET OF FEATURES 902

FEED FIRST SET OF FEATURES INTO FIRST DEEP LEARNING MODEL 904

OBTAIN THIRD SET OF FEATURES 906

FEED THIRD SET OF FEATURES INTO GAME MODEL 908

AUGMENT EITHER THE THIRD SET OF FEATURES OR A FOURTH SET OF FEATURES USED IN A RANDOM EFFECTS PORTION OF THE GAME MODEL WITH A SECOND SET OF FEATURES FROM A FINAL FULLY CONNECTED LAYER OF THE FIRST DEEP LEARNING MODEL 910

OBTAIN WEIGHTS LEARNED DURING TRAINING OF THE GAME MODEL 912

USE WEIGHTS TO TRAIN A FIRST FULLY CONNECTED LAYER OF THE FIRST DEEP LEARNING MODEL 914

*FIG. 9*

1000

1002

SOFTWARE ARCHITECTURE — 1010

APPLICATIONS

| HOME — 1050 | LOCATION — 1058 | THIRD PARTY APPLICATION — 1066 |
| CONTACTS — 1052 | MEDIA — 1060 | |
| BROWSER — 1054 | MESSAGING — 1062 | |
| BOOK READER — 1056 | GAME — 1064 | |

1012
API CALLS

1014
MESSAGES

FRAMEWORKS — 1008

LIBRARIES — 1006

| SYSTEM — 1030 | API — 1032 | OTHER — 1034 |

OPERATING SYSTEM — 1004

| KERNEL — 1020 | SERVICES — 1022 | DRIVERS — 1024 |

MACHINE — 1100

| PROCESSORS — 1110 | MEMORY — 1130 | I/O COMPONENTS — 1150 |

*FIG. 10*

*FIG. 11*

Europäisches
Patentamt

European
Patent Office

Office européen
des brevets

**EUROPEAN SEARCH REPORT**

Application Number

EP 19 16 8125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/323268 A1 (ZHANG XIANXING [US] ET AL) 9 November 2017 (2017-11-09) <br> * abstract * <br> * paragraph [0024] - paragraph [0048] * <br> * figures 1-3 * | 1-15 | INV. <br> G06N3/04 <br> G06N3/08 <br> G06N5/00 <br> G06N20/20 <br> G06Q10/10 |
| A | LIANG TANG ET AL: "An Empirical Study on Recommendation with Multiple Types of Feedback", <br> PROCEEDINGS OF THE 22ND ACM SIGKDD INTERNATIONAL CONFERENCE ON KNOWLEDGE DISCOVERY AND DATA MINING, KDD '16, ACM PRESS, NEW YORK, NEW YORK, USA, <br> 13 August 2016 (2016-08-13), pages 283-292, XP058276819, <br> DOI: 10.1145/2939672.2939690 <br> ISBN: 978-1-4503-4232-2 <br> * abstract * <br> * Section 1, 3 * | 1-15 | G06Q10/06 <br><br> ADD. <br> G06N5/02 <br> G06N7/00 |
| A | HENG-TZE CHENG ET AL: "Wide & Deep Learning for Recommender Systems", <br> DEEP LEARNING FOR RECOMMENDER SYSTEMS, ACM, 2 PENN PLAZA, SUITE 701 NEW YORK NY 10121-0701 USA, <br> 15 September 2016 (2016-09-15), pages 7-10, XP058280488, <br> DOI: 10.1145/2988450.2988454 <br> ISBN: 978-1-4503-4795-2 <br> * abstract * <br> * Sections 3.3, 4.2 * | 1-15 | TECHNICAL FIELDS SEARCHED (IPC) <br><br> G06N <br> G06Q |

The present search report has been drawn up for all claims

| Place of search | Date of completion of the search | Examiner |
|---|---|---|
| The Hague | 20 September 2019 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 8125

This annex lists the patent family members relating to the patent documents cited in  the above-mentioned European search report.
The members are as contained in the European Patent Office EDP file on
The European Patent Office is in no way liable for these particulars which are merely given for the purpose of information.

20-09-2019

| Patent document cited in search report | Publication date | Patent family member(s) | Publication date |
|---|---|---|---|
| US 2017323268        A1 | 09-11-2017 | NONE | |

For more details about this annex : see Official Journal of the European Patent Office, No. 12/82

EPO FORM P0459